# EUROPÄISCHE PATENTANMELDUNG

(11) **EP 2 528 269 A1**
(43) Veröffentlichungstag der Anmeldung: **28.11.2012**
(21) Anmeldenummer: 12004063.9
(22) Anmeldetag: 24.05.2012
(51) Int. Cl.: H04L 12/14

(54) **Verfahren und System zur Onlinekostenabrechnung eines Teilnehmers, Programm und Computerprogrammprodukt**

(30) Priorität: 24.05.2011 DE 102011103010
(71) Anmelder: Deutsche Telekom AG, 53113 Bonn (DE)
(72) Erfinder: Breitbach, Markus, Dr., 53227 Bonn (DE)
(74) Vertreter: Schwöbel, Thilo K.

(57) **Zusammenfassung**

Die Erfindung betrifft ein Verfahren zur Onlinekostenabrechnung eines Teilnehmers (5), wobei der Teilnehmer einen Telekommunikationsdienst in einem Telekommunikationsnetzwerk (10) gemäß einem sich auf den Telekommunikationsdienst beziehenden Vertrag nutzt, wobei das Verfahren die folgenden Schritte umfasst:
-- Übermittlung durch eine Rechnungsfunktionseinheit (15) einer Kosteninformation an eine Datenverkehrsmanagementeinheit (20), wobei ein aktueller oberer Datenverbrauchsschwellenwert aus der Kosteninformation abgeleitet wird, wobei der aktuelle obere Datenverbrauchsschwellenwert eine aktuelle Maximaldatenmenge angibt, die vom Teilnehmern bezüglich des Telekommunikationsdienstes nutzbar ist, wobei der Telekommunikationsdienst ein normales Dienstgebrauchsmuster aufweist,
-- Überwachung durch die Datenverkehrsmanagementeinheit des Datenflusses, der vom Teilnehmern bezüglich des Telekommunikationsdienstes genutzt wird, und bestimmt ein aktuelles Datenverbrauchsvolumen des Teilnehmers,
-- Vergleich durch die Datenverkehrsmanagementeinheit des aktuellen Datenverbrauchsvolumens des Teilnehmers mit dem aktuellen oberen Datenverbrauchsschwellenwert und,
-- Modifikation des normalen Dienstgebrauchsmusters des

Telekommunikationsdienstes falls das aktuelle Datenverbrauchsvolumen und der aktuelle obere Datenverbrauchsschwellenwert eine vorbestimmte Bedingung erfüllen, wobei der aktuelle obere Datenverbrauchsschwellenwert basierend auf einem gekauften Maximaldatenvolumen bezüglich eines ersten Zeitintervalls aktualisiert wird, wobei das Aktualisierungsintervall des aktuellen oberen Datenverbrauchsschwellenwerts auf einem zweiten Zeitintervall basiert, wobei das zweite Zeitintervall kleiner als das erste Zeitintervall ist.

## Beschreibung

Die vorliegende Erfindung betrifft ein Verfahren und ein System zur Onlinekostenabrechnung eines Teilnehmers, wobei der Teilnehmer einen Telekommunikationsdienst in einem Telekommunikationsnetzwerk gemäß einem Vertrag bezüglich des Telekommunikationsdienstes nutzt. Weiterhin, bezieht sich die vorliegende Erfindung auf ein Programm und ein Computerprogrammprodukt.

Der Gegenstand der Erfindung betrifft allgemein das Abrechnen der Kosten eines Teilnehmers eines Telekommunikationsnetzwerks, wie z.B. eines öffentlichen mobilen terrestrischen Netzwerkes. Der Teilnehmer ist bevorzugt ein mobiler Teilnehmer mit einem Mobilfunkgerät, wie ein zellulares Telefon, ein Smartphone, ein PDA (personal digital assistant) oder ein persönliches Navigationsgerät oder ähnliches. Das Mobilfunkgerät wird im Folgenden auch der Teilnehmer genannt. Das Mobilfunkgerät muss im Sinne dieser Erfindung nicht notwendigerweise ein bewegliches Gerät sein; es kann sich auch um ein fest installiertes Gerät handeln, das mobile Kommunikationstechnologie basierend auf z.B. einem öffentlichen mobilen terrestrischen Netzwerk verwendet.

Gegenwärtig ist eine Möglichkeit der Nutzung von mobilen Telekommunikationsdiensten (d.h. Dienste basierend auf der Verwendung von mobilen Telekommunikationsnetzwerken zur Versorgung von Mobilfunkgeräten) die Verwendung von sogenannten Flatrate Tarifen, die dem Teilnehmer die Möglichkeit geben, unbegrenzt durch Zeit oder Datenvolumen mit dem Telekommunikationsnetzwerk verbunden zu sein.

Typischerweise beinhalten solche Flatrate Tarife oder Telekommunikationsverträge die Bestimmung, dass über ein bestimmtes maximales Datenvolumen hinaus nur eine reduzierte Übertragungsbandbreite verfügbar ist oder eine Übertragung nur gemäß anderen Telekommunikationsstandards mit geringerer Bandbreite möglich ist. Solche Tarife werden auch faire Flatrate Tarife genannt.

Typischerweise ist es in diesen Tarifen weiter bestimmt, dass der Nutzer oder Teilnehmer ein bestimmtes maximales Datenübertragungsvolumen hat (ohne reduzierte Bandbreite), z.B. 1 GB pro erstem Zeitintervall, typischerweise ein Monat, und dass am Anfang eines solchen ersten Zeitintervalls der Teilnehmer dieses maximale Datenübertragungsvolumen für dieses erste Zeitintervall ohne Begrenzung nutzen darf. Die Konsequenz ist, dass ein ungleichmäßiges Dienstgebrauchsmuster entsteht, d.h. dass in der ersten Hälfte des ersten Zeitintervalls (typischerweise in der ersten Hälfte eines Monats) ein höheres Datenvolumen oder ein höherer Netzwerkverkehr vom Telekommunikationsnetzwerk registriert wird als in der zweiten Hälfte des ersten Zeitintervalls (d.h. in diesem Beispiel in der zweiten Hälfte des Monats). Das bedeutet, dass entweder die Netzwerkressourcen die Anforderungen des höheren Datenvolumens oder des höheren Netzwerkverkehrs erfüllen müssen, wodurch höhere Kosten entstehen, oder die Dienstverfügbarkeit der Teilnehmer des Netzwerks reduziert werden muss.

Es ist daher eine Aufgabe der vorliegenden Erfindung, eine ausgeglichene Nutzung der Netzwerkkapazitäten verbunden mit der Verwendung von Flatrate Tarifen zu ermöglichen.

### ZUSAMMENFASSUNG

Der Gegenstand der vorliegenden Erfindung ist, ein Verfahren zur Onlinekostenabrechnung eines Teilnehmers zur Verfügung zu stellen, wobei der Teilnehmer einen Telekommunikationsdienst in einem Telekommunikationsnetzwerk nutzt, wobei die Netzwerknutzung des Teilnehmern auf die geringstmögliche Weise durch Diensteinschränkungen wegen verbrauchtem Datenvolumen gehindert wird, während zugleich eine ausgeglichene Kapazitätsauslastung des Netzwerks ermöglicht wird. Weiterhin ist es ein Gegenstand der vorliegenden Erfindung, ein System zur Onlinekostenabrechnung eines Teilnehmers zur Verfügung zu stellen.

Der Gegenstand der vorliegenden Erfindung wird erreicht durch ein Verfahren zur Onlinekostenabrechnung eines Teilnehmers, wobei der Teilnehmer einen Telekommunikationsdienst in einem Telekommunikationsnetzwerk gemäß einem sich auf den Telekommunikationsdienst beziehenden Vertrag nutzt, wobei das Verfahren die folgenden Schritte umfasst:
-- Übermittlung durch eine Rechnungsfunktionseinheit einer Kosteninformation an eine Datenverkehrsmanagementeinheit, wobei ein aktueller oberer Datenverbrauchsschwellenwert aus der Kosteninformation abgeleitet wird, wobei der aktuelle obere Datenverbrauchsschwellenwert eine aktuelle Maximaldatenmenge angibt, die vom Teilnehmer bezüglich des Telekommunikationsdienstes nutzbar ist, wobei der Telekommunikationsdienst ein normales Dienstgebrauchsmuster aufweist,
-- Überwachung durch die Datenverkehrsmanagementeinheit des Datenflusses, der vom Teilnehmer bezüglich des Telekommunikationsdienstes genutzt wird, und Bestimmung eines aktuelle Datenverbrauchsvolumens des Teilnehmers,
-- Vergleich durch die Datenverkehrsmanagementeinheit des aktuellen Datenverbrauchsvolumens des Teilnehmers mit dem aktuellen oberen Datenverbrauchsschwellenwert und,
-- Modifikation des normalen Dienstgebrauchsmusters des Telekommunikationsdienstes falls das aktuelle Datenverbrauchsvolumen und der aktuelle obere Datenverbrauchsschwellenwert eine vorbestimmte Bedingung erfüllen, wobei der aktuelle obere Datenverbrauchsschwellenwert basierend auf einem gekauften Maximaldatenvolumen bezüglich eines ersten Zeitintervalls aktualisiert wird, wobei das Aktualisierungsintervall des aktuellen oberen Datenverbrauchsschwellenwerts auf einem zweiten Zeitintervall basiert, wobei das zweite Zeitintervall kleiner als das erste Zeitintervall ist.

Es ist gemäß der vorliegenden Erfindung vorteilhaft möglich, dass eine ausgeglichene Netzwerkauslastung bzw. Netzwerknutzung von Teilnehmern mit einem Flatrate-Tarif erreicht werden kann. Insbesondere bezieht sich die ausgeglichene Netzwerknutzung auf eine ausgeglichene Netzwerkauslastung während des ersten Zeitintervalls, welcher typischerweise einer Abrechnungsperiode entspricht (die typsicherweise ein Monat oder eine Mehrzahl an Monaten oder an Wochen beträgt, sie kann aber auch eine Woche oder sogar noch kürzer sein, wie z.B. drei Tage oder fünf Tage). Das bedeutet, dass Restriktionen von Teilnehmern (d.h. Modifikation des normalen Dienstgebrauchsmusters), die das maximale Datenvolumen in einem gegebenen Vertragskontext aufgebraucht haben, nicht mehr in der zweiten Hälfte (oder gegen Ende) des ersten Zeitintervalls (oder Abrechnungszeitraums) konzentriert sind, sondern gleichermaßen wahrscheinlich während des gesamten ersten Zeitintervalls sind.

Dadurch ist es vorteilhaft möglich, dass gemäß der vorliegenden Erfindung das Telekommunikationsnetzwerk auf eine effiziente Weise dimensioniert und genutzt werden kann.

Gemäß einer bevorzugten Ausführungsform der vorliegenden Erfindung ist es bevorzugt, dass der aktuelle obere Datenverbrauchsschwellenwert durch Ansteigen (oder durch Erhöhen) während der Vertragslaufzeit des Teilnehmers aktualisiert wird.

Dadurch ist es insbesondere vorteilhaft möglich, dass gemäß einer ersten Variante der vorliegenden Erfindung der aktuelle obere Datenverbrauchsschwellenwert aktualisiert wird, indem kontinuierlich der Wert des aktuellen oberen Datenverbrauchsschwellenwerts erhöht wird. Gemäß einer zweiten Variante der vorliegenden Erfindung ist es insbesondere vorteilhaft, dass der aktuelle obere Datenverbrauchsschwellenwert durch Hinzufügen eines Inkrementwerts aktualisiert wird. Der Inkrementwert wird z.B. durch folgendes Verfahren erhalten: In einem ersten Schritt wird eine gekaufte Maximaldatenrate berechnet, basierend auf der vertraglichen Situation des betreffenden Teilnehmers, d.h. das gekaufte Maximaldatenvolumen wird durch das erste Zeitintervall geteilt (typischerweise die Abrechnungsperiode), z.B. 1 GB (ein Gigabyte) pro Monat. In einem zweiten Schritt, wird diese maximale Datenrate auf das zweite Zeitintervall bezogen, d.h. das Aktualisierungsintervall des aktuellen oberen Datenverbrauchsschwellenwerts. Angenommen ein Monat habe durchschnittlich 30 Tage, dann entspricht solch eine gekaufte Maximaldatenrate etwa 1,389 MB (1,389 Megabytes) pro Stunde oder etwa 23,148 kB (23,148 Kilobytes) pro Minute oder etwa 386 Bytes pro Sekunde (angenommen 1 kB = 10³ Bytes, 1 MB = 10⁶ Bytes, 1 GB = 10⁹ Bytes). Abhängig vom Aktualisierungsintervall oder zweiten Zeitintervall, gemäß der zweiten Variante der vorliegenden Erfindung, wird der aktuelle obere Datenverbrauchsschwellenwert erhöht, z.B. um 386 Bytes jede Sekunde, oder 23,148 kB jede Minute, oder 1,389 MB jede Stunde.

Gemäß beider Varianten der vorliegenden Erfindung ist es durch Aktualisieren des aktuellen oberen Datenverbrauchsschwellenwerts möglich, dass, indem dieser erhöht wird - entweder kontinuierlich oder quasikontinuierlich (indem ein vergleichsweiser kleiner Inkrementwert zum vorhergehenden Wert hinzugefügt wird und indem relativ häufig aktualisiert wird, zumindest im Vergleich zum ersten Zeitintervall) -, die Teilnehmer mit dem gekauften Datenvolumen auf einer fein eingeteilten Zeitbasis versorgt werden können, ohne dass die Speicherung des verbrauchten Datenvolumens für jeden Nutzer zu jedem Moment in der Datenverkehrsmanagementeinheit erforderlich ist.

Im Kontext der vorliegenden Erfindung und für Perioden, in denen keine Datenverbindung aktiv ist oder in denen kein Verbrauch von Datenvolumen erfolgt mit Bezug auf einen spezifischen Vertrag, umfasst der Ausdruck "Aktualisieren des oberen Datenverbrauchsschwellenwert" nicht notwendigerweise das Aktualisieren, für diesen spezifischen Vertrag individuell, eines Speicherorts eines Computerspeichers jedesmal wenn der zweite Zeitintervall abgelaufen ist. Es ist auch möglich und bevorzugt gemäß der vorliegenden Erfindung, dass nur falls eine Datenverbindung aktiv ist oder nur falls Datenvolumen verbraucht wird in Bezug auf den spezifischen Vertrag, der obere Datenverbrauchsschwellenwert aktualisiert wird. Bevorzugt wird diese Aktualisierung durchgeführt, indem eine einfache Berechnung basierend auf einer Taktinformation (z.B. durch Zählen der Anzahl an zweiten Zeitintervallen) oder basierend auf einer Zeitdifferenz zum Vertragsbeginn durchgeführt wird, wie z.B. Multiplizieren der Taktinformation mit einer statischen Information wie z.B. die maximale Datenrate pro zweitem Zeitintervall. Dadurch ist es vorteilhaft möglich, dass die Systembelastung für das Überwachen und das Verfolgen des oberen Datenverbrauchsschwellenwerts reduziert werden kann, weil nur eine (kontinuierlich variierende) Taktinformation für eine Vielzahl an spezifischen Verträgen verwendet werden kann. So kann z.B. die Taktinformation für einen spezifischen Vertrag an demjenigen Tag des Beginns des Vertrags für alle Verträge, die am selben Tag starten, beginnen, sodass vermieden werden kann, dass alle Verträge verfolgt und aktualisiert werden, wenn Verträge nicht aktiv (d.h. eine aktive Datenverbindung haben) sind.

Es ist ein weiterer Vorteil des erfindungsgemäßen Verfahrens, dass ein transparentes Abrechnungs- und Netzwerkzugangssystem zur Verfügung gestellt werden kann, sodass es möglich ist, dass ein Teilnehmer herausfinden kann, ob eine Restriktion des Netzwerkzugangs, d.h. eine Modifikation des normalen Dienstgebrauchsmusters des Telekommunikationsdienstes (z.B. eine Limitierung der verfügbaren Bandbreite für den spezifischen Teilnehmer, weil das maximale Datenvolumen verbraucht ist) gerechtfertigt ist oder nicht.

Es ist weiterhin bevorzugt - insbesondere falls der zweite Zeitintervall eine Sekunde oder zehn Sekunden überschreitet -, dass das Aktualisieren des aktuellen oberen Datenverbrauchsschwellenwerts nicht für alle Teilnehmer zum selben Zeitpunkt erfolgt. Dieses ermöglicht eine ausgeglichene Auslastung der Netzwerkkapazität, weil das Aktualisieren des aktuellen oberen Datenverbrauchsschwellenwerts bedeutet, dass Datenvolumen für die Nutzung durch einen Teilnehmer frei wird.

Es ist weiterhin erfindungsgemäß bevorzugt, dass eine Mindestzeit bzw. ein Mindestzeitinterval (nachfolgend auch als drittes Zeitintervall bezeichnet) vergehen muss, bevor eine einmal durchgeführte Modifikation des normalen Dienstgebrauchsmusters des Telekommunikationsdienstes (z.B. eine Limitierung der verfügbaren Bandbreite für den spezifischen Teilnehmer, weil das maximale Datenvolumen verbraucht ist) wieder aufgehoben wird. Dies ist deshalb erfindungsgemäß von Vorteil, weil so vermieden werden kann, dass in vergleichsweise kurzen zeitlichen Abständen im Telekommunikationsnetz immer wieder die Modifikation des normalen Dienstgebrauchsmusters des Telekommunikationsdienstes vorgenommen und wieder aufgehoben werden muss, was mit einem erhöhten Signalisierungsaufwand verbunden ist und daher- im Sinne einer Vermeidung von Netzüberlastsituationen - möglichst in seiner Häufigkeit zu begrenzen ist.

Es ist gemäß der vorliegenden Erfindung bevorzugt, dass ein aktueller unterer Datenverbrauchsschwellenwert aus der Kosteninformation bestimmt wird, wobei der aktuelle untere Datenverbrauchsschwellenwert eine aktuelle Minimaldatenmenge, die vom Teilnehmer nutzbar ist, anzeigt, wobei das Verfahren die folgenden Schritte umfasst:
-- die Datenverkehrsmanagementeinheit vergleicht das aktuelle Datenverbrauchsvolumen des Teilnehmers mit dem aktuellen unteren Datenverbrauchsschwellenwert und
I -- die Datenverkehrsmanagementeinheit passt das aktuelle Datenverbrauchsvolumen an den aktuellen unteren Datenverbrauchsschwellenwert an, falls das aktuelle Datenverbrauchsvolumen kleiner als der aktuelle untere Datenverbrauchsschwellenwert ist, wobei der aktuelle untere Datenverbrauchsschwellenwert basierend auf dem gekauften Maximaldatenvolumen bezüglich des ersten Zeitintervalls aktualisiert wird, wobei das Aktualisierungsintervall des aktuellen unteren Datenverbrauchsschwellenwerts auf dem zweiten Zeitintervall basiert, wobei das zweite Zeitintervall kleiner als das erste Zeitintervall ist.

Dadurch ist es gemäß der vorliegenden Erfindung vorteilhaft möglich, dass Nutzungsspitzen, und daher Spitzen der Netzwerkbelastung, von Teilnehmern, die ihr gekauftes Datenvolumen für eine vergleichsweise lange Zeit nicht genutzt haben (und daher eine vergleichsweise große Differenz zwischen einer vergleichsweise geringen Datenvolumennutzung und einem vergleichsweise hohen aktuellen oberen Datenverbrauchsschwellenwert haben) vermieden werden können.

Auch in Bezug auf den aktuellen unteren Datenverbrauchsschwellenwert ist es insbesondere vorteilhaft gemäß anderen Varianten der vorliegenden Erfindung, dass der aktuelle untere Datenverbrauchsschwellenwert aktualisiert wird
-- entweder durch kontinuierliches Erhöhen des aktuellen unteren Datenverbrauchsschwellenwertes, oder
-- durch Addieren eines Inkrementwertes zum vorhergehenden aktuellen unteren Datenverbrauchsschwellenwert (in analoger Weise wie in Bezug auf den aktuellen oberen Datenverbrauchsschwellenwert beschrieben).

Im Kontext der vorliegenden Erfindung und für Perioden, in denen keine Datenverbindung aktiv ist oder in denen kein Verbrauch von Datenvolumen erfolgt mit Bezug auf einen spezifischen Vertrag, umfasst der Ausdruck "Aktualisieren des unteren Datenverbrauchsschwellenwert" nicht notwendigerweise das Aktualisieren, für diesen spezifischen Vertrag individuell, eines Speicherorts eines Computerspeichers jedesmal wenn der zweite Zeitintervall abgelaufen ist. Es ist auch möglich und bevorzugt gemäß der vorliegenden Erfindung, dass nur falls eine Datenverbindung aktiv ist oder nur falls Datenvolumen verbraucht wird in Bezug auf den spezifischen Vertrag, der untere Datenverbrauchsschwellenwert aktualisiert wird, bevorzugt wie in Bezug auf den oberen Datenverbrauchsschwellenwert beschrieben.

Es ist gemäß der vorliegenden Erfindung bevorzugt, dass die vorbestimmte Bedingung des aktuellen Datenverbrauchsvolumens und des aktuellen oberen Datenverbrauchsschwellenwerts umfasst:
-- das aktuelle Datenverbrauchsvolumen überschreitet den aktuellen oberen Datenverbrauchsschwellenwert oder
-- das aktuelle Datenverbrauchsvolumen unterscheidet sich weniger vom aktuellen oberen Datenverbrauchsschwellenwert als ein vorbestimmter Wert.

Dadurch ist es vorteilhaft möglich, dass das normale Dienstgebrauchsmuster modifiziert wird (z.B. Limitierung der nutzbaren Bandbreite für einen spezifischen Teilnehmer und/oder Reduzierung der Dienstqualitätsparameter des Datenverkehrs in Bezug auf den spezifischen Teilnehmer)
-- wenn das aktuelle Datenverbrauchsvolumen den aktuellen oberen Datenverbrauchsschwellenwert erreicht oder
-- vor diesem Ereignis, z.B. um dem Teilnehmer anzuzeigen, dass das gekaufte Maximaldatenvolumen bald aufgebraucht ist.

Gemäß einer weiteren Ausführungsform der vorliegenden Erfindung ist es bevorzugt, dass der aktuelle obere Datenverbrauchsschwellenwert und/oder der aktuelle untere Datenverbrauchsschwellenwert durch Erhöhen während der Vertragslaufzeit des Teilnehmers aktualisiert werden.

Dadurch ist es vorteilhaft möglich, dass ein transparentes Abrechnungs- und Netzwerkzugangssystem zur Verfügung gestellt werden kann, sodass es möglich ist, dass ein Teilnehmer herausfinden kann, ob eine Restriktion des Netzwerkzugangs gerechtfertigt ist oder nicht.

Gemäß einer weiteren Ausführungsform der vorliegenden Erfindung ist es bevorzugt, dass zu Beginn der Vertragslaufzeit bezüglich des Telekommunikationsdienstes der aktuelle obere Datenverbrauchsschwellenwert dem anfänglichen Datenvolumen entspricht, das vom Teilnehmer genutzt wird, und wobei am Ende der Vertragslaufzeit der aktuelle obere Datenverbrauchsschwellenwert einem Enddatenvolumen entspricht, wobei das Enddatenvolumen entspricht:
-- dem gekauften maximalen Datenvolumen multipliziert mit der Anzahl der ersten Zeitintervalle des Vertrags, oder
-- der Summe aus dem anfänglichen Datenvolumen auf der einen Seite und dem gekaufte maximalen Datenvolumen multipliziert mit der Anzahl der ersten Zeitintervalle des Vertrags auf der anderen Seite.

Dadurch ist vorteilhaft möglich, dass dem Teilnehmer ein faires und transparentes Abrechnungsschema zur Verfügung gestellt wird.

Gemäß einer weiteren Ausführungsform der vorliegenden Erfindung ist es bevorzugt, dass das normale Dienstgebrauchsmuster durch Anwendung eines reduzierten Dienstgebrauchsmusters modifiziert wird, wobei das reduzierte Dienstgebrauchsmuster aufweist:
-- eine reduzierte Bandbreite im Vergleich zum normalen Dienstgebrauchsmuster und/oder
-- eine reduzierte Priorität der Datenübertragung im Vergleich zum normalen Dienstgebrauchsmuster.

Dadurch ist es auf einfache Weise möglich, dass die Netzwerknutzung des Teilnehmers bis zu einem im Vertrag vereinbarten Niveau begrenzt wird.

Gemäß einer weiteren Ausführungsform der vorliegenden Erfindung ist es bevorzugt, dass das erste Zeitintervall entweder einem Monat oder einer Woche entspricht, und wobei das zweite Zeitintervall gleich groß ist wie oder kleiner ist als:
-- eine Sekunde,
-- eine Minute,
-- eine Stunde, oder
-- 24 Stunden,
oder dass das erste Zeitintervall einem Tag entspricht, und wobei das zweite Zeitintervall gleich groß ist wie oder kleiner ist als:
-- eine Sekunde
-- eine Minute, oder
-- eine Stunde.

Für beide Realisierungen gemäß der vorliegenden Erfindung ist das zweite Zeitintervall viel kleiner als das erste Zeitintervall. Gemäß der vorliegenden Erfindung ist es bevorzugt,
-- dass das erste Zeitintervall mindestens 5 mal so lang ist wie das zweite Zeitintervall, oder
-- dass das erste Zeitintervall mindestens 10 mal so lang ist wie das zweite Zeitintervall, oder
-- dass das erste Zeitintervall mindestens 20 mal so lang ist wie das zweite Zeitintervall, oder
-- dass das erste Zeitintervall mindestens 50 mal so lang ist wie das zweite Zeitintervall, oder
-- dass das erste Zeitintervall mindestens 100 mal so lang ist wie das zweite Zeitintervall, oder
-- dass das erste Zeitintervall mindestens 1000 mal so lang ist wie das zweite Zeitintervall.

Es ist weiterhin bevorzugt gemäß der vorliegenden Erfindung, dass die Onlinekostenabrechnung des Teilnehmers bezüglich eines anderen Telekommunikationsdienstes im Telekommunikationsnetzwerk durchgeführt wird, wobei das Verfahren die folgenden Schritte umfasst:
-- Übermittlung durch die Rechnungsfunktionseinheit einer weiteren Kosteninformation an die Datenverkehrsmanagementeinheit, wobei ein aktueller weiterer oberer Datenverbrauchsschwellenwert aus der weiteren Kosteninformation bestimmt wird, wobei der aktuelle weitere obere Datenverbrauchsschwellenwert eine aktuelle Maximaldatenmenge anzeigt, die vom Teilnehmer bezüglich des weiteren Telekommunikationsdienstes nutzbar ist, wobei der weitere Telekommunikationsdienst ein weiteres normales Dienstgebrauchsmuster aufweist,
-- Überwachung durch die Datenverkehrsmanagementeinheit des Datenflusses, der vom Teilnehmer bezüglich des weiteren Telekommunikationsdienstes genutzt wird, und Bestimmung eines aktuellen weiteren Datenverbrauchsvolumens des Teilnehmers,
-- Vergleich durch die Datenverkehrsmanagementeinheit des aktuellen weiteren Datenverbrauchsvolumens des Teilnehmers mit dem aktuellen weiteren oberen Datenverbrauchsschwellenwert und,
-- Modifikation des normalen Dienstgebrauchsmusters des weiteren Telekommunikationsdienstes, falls das aktuelle weitere Datenverbrauchsvolumen und der aktuelle weitere obere Datenverbrauchsschwellenwert eine vorbestimmte weitere Bedingung erfüllen, wobei der aktuelle weitere obere Datenverbrauchsschwellenwert basierend auf einem weiteren gekauften Maximaldatenvolumen bezüglich des ersten Zeitintervalls aktualisiert wird, wobei das Aktualisierungsintervall des aktuellen weiteren oberen Datenverbrauchsschwellenwerts auf dem zweiten Zeitintervall basiert, wobei das zweite Zeitintervall kleiner als das erste Zeitintervall ist.

Die vorliegende Erfindung bezieht sich weiterhin auf ein System zur Onlinekostenabrechnung eines Teilnehmers, wobei der Teilnehmer einen Telekommunikationsdienst in einem Telekommunikationsnetzwerk gemäß einem Vertrag bezüglich des Telekommunikationsdienstes nutzt, wobei das System eine Rechnungsfunktionseinheit und eine Datenverkehrsmanagementeinheit umfasst, wobei dass System derart konfiguriert ist, dass
-- die Rechnungsfunktionseinheit eine Kosteninformation an die Datenverkehrsmanagementeinheit übermittelt, wobei ein aktueller oberer Datenverbrauchsschwellenwert aus der Kosteninformation bestimmt wird, wobei der aktuelle obere Datenverbrauchsschwellenwert eine aktuelle Maximaldatenmenge anzeigt, die vom Teilnehmer bezüglich des Telekommunikationsdienstes nutzbar ist, wobei der Telekommunikationsdienst ein normales Dienstgebrauchsmuster aufweist,
-- die Datenverkehrsmanagementeinheit den Datenfluss überwacht, der vom Teilnehmer bezüglich des Telekommunikationsdienstes genutzt wird, und ein aktuelles Datenverbrauchsvolumen des Teilnehmers bestimmt,
-- die Datenverkehrsmanagementeinheit das aktuelle Datenverbrauchsvolumen des Teilnehmers mit dem aktuellen oberen Datenverbrauchsschwellenwert vergleicht und,
-- das normale Dienstgebrauchsmuster des Telekommunikationsdienstes modifizierbar ist, falls das aktuelle Datenverbrauchsvolumen und der aktuelle obere Datenverbrauchsschwellenwert eine vorbestimmte Bedingung erfüllen, wobei der aktuelle obere Datenverbrauchsschwellenwert basierend auf einem gekauften Maximaldatenvolumen bezüglich eines ersten Zeitintervalls aktualisiert wird, wobei das Aktualisierungsintervall des aktuellen oberen Datenverbrauchsschwellenwerts auf einem zweiten Zeitintervall basiert, wobei das zweite Zeitintervall kleiner als das erste Zeitintervall ist.

Gemäß der vorliegenden Erfindung ist es mit Bezug auf das erfindungsgemäße System möglich, dass eine ausgeglichene Netzwerknutzung durch Teilnehmer mit einem Flatrate Tarif erreichbar ist. Diese ausgeglichene Netzwerknutzung von solchen Teilnehmern bezieht sich auf eine ausgeglichene Netzwerkauslastung während des ersten Zeitintervalls.

Zusätzlich bezieht sich die vorliegende Erfindung auf ein Programm umfassend einen Programmcode, der, wenn er auf einem Computer ausgeführt wird, den Computer zur Durchführung eines Verfahrens gemäß der vorliegenden Erfindung veranlasst.

Zusätzlich bezieht sich die vorliegende Erfindung auf ein Computerprogrammprodukt zur Onlinekostenabrechnung eines Teilnehmers, umfassend ein Computerprogramm, das in einem Speicher gespeichert ist, wobei das Computerprogramm einen Programmcode umfasst, der, wenn er auf einem Computer ausgeführt wird, den Computer zur Durchführung eines Verfahrens gemäß der vorliegenden Erfindung veranlasst.

Diese und andere Charakteristiken, Merkmale und Vorteile der vorliegenden Erfindung werden in der folgenden detaillierten Beschreibung ersichtlich, die in Verbindung mit den beispielhaften Figuren die Prinzipien der vorliegenden Erfindung illustriert. Diese Beschreibung ist lediglich als beispielhaft anzusehen, ohne dass der Schutzbereich der vorliegenden Erfindung eingeschränkt werden soll. Die Figuren und die Bezugszeichen beziehen sich auf die angehängten Zeichnungen.

### KURZE BESCHREIBUNG DER ZEICHNUNGEN

Figur 1 zeigt schematisch ein Blockdiagramm eines Systems gemäß der vorliegenden Erfindung.

Figur 2 zeigt schematisch ein beispielhaftes Datennutzungsszenario eines konventionellen fairen Flatrate Tarifs.

Figuren 3 bis 6 zeigen schematisch beispielhafte Datennutzungsszenarien eines fairen Flatrate Tarifs gemäß verschiedenen Ausführungsformen der vorliegenden Erfindung.

Figur 7 zeigt schematisch einen Verarbeitungsablauf gemäß Ausführungsformen der vorliegenden Erfindung.

Figur 8 zeigt schematisch einen alternativen Verarbeitungsablauf gemäß einem Ausführungsbeispiel der vorliegenden Erfindung.

### DETAILLIERTE BESCHREIBUNG

Die vorliegende Erfindung wird mit Bezug auf bestimmte Ausführungsformen und bestimmte Zeichnungen beschrieben. Die Erfindung ist jedoch nicht auf diese Ausführungsformen bzw. Zeichnungen beschränkt, sondern die Erfindung ist nur durch die Ansprüche beschränkt. Die Zeichnungen sind lediglich schematisch und nicht einschränkend. In den Zeichnungen sind zu Darstellungszwecken möglicherweise einige Elemente übermäßig groß und nicht maßstabsgerecht dargestellt.

Wenn ein unbestimmter oder bestimmter Artikel mit Bezug auf die Einzahl eines Nomens benutzt wird, so wie z.B. "ein" oder "der", beinhaltet dieses auch den Plural dieses Nomens, wenn nicht etwas anderes bestimmt wird.

Weiterhin werden Ausdrücke wie der/die/das erste, zweite usw. in der Beschreibung und in den Ansprüchen zur Unterscheidung zwischen ähnlichen Elementen verwendet. Es muss sich nicht notwendigerweise um die Beschreibung einer sequentiellen oder zeitlichen Reihenfolge handeln. Diese Ausdrücke sind austauschbar unter geeigneten Umständen und die beschriebenen Ausführungsformen sind funktionsfähig in anderen Reihenfolgen als die beschriebenen Reihenfolgen.

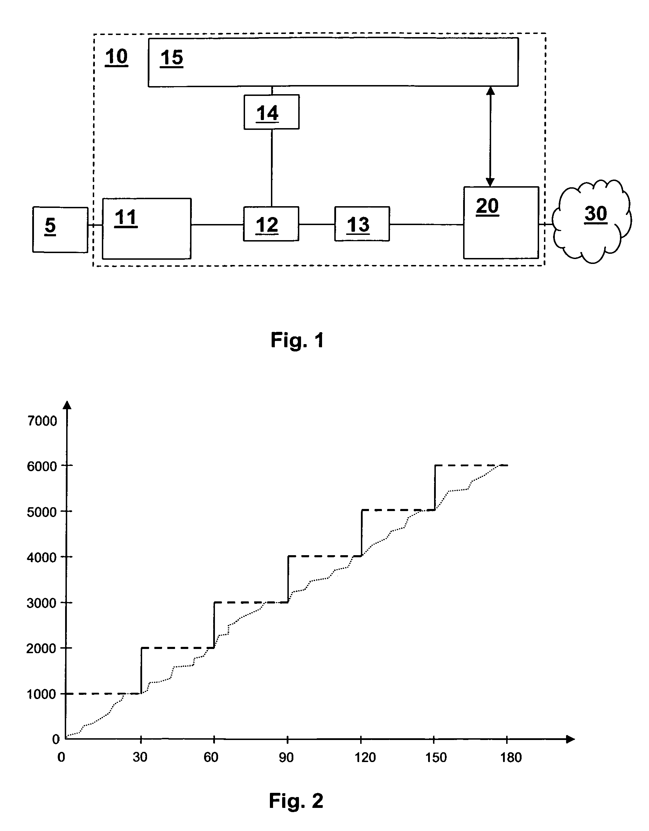

In Figur 1 wird eine schematische Darstellung eines Blockdiagramms gemäß der vorliegenden Erfindung gezeigt. Ein Teilnehmer 5 nutzt einen Telekommunikationsdienst in einem Telekommunikationsnetzwerk 10. Das Telekommunikationsnetzwerk 10 stellt z.B. einen Dienst zum Herunterladen von Daten aus dem Internet 30 zur Verfügung.

Das Telekommunikationsnetzwerk 10 umfasst ein Funkzugriffsnetzwerk 11, und z.B. einen Serving GPRS Support Node (SGSN) 12, ein Gateway GPRS support node (GGSN) 13, ein Home Location Register 14, und eine Rechnungsfunktionseinheit 15 oder ein Rechnungsfunktionssystem 15. Weiterhin umfasst das Telekommunikationsnetzwerk 10 eine Datenverkehrsmanagementeinheit 20.

Die Datenverkehrsmanagementeinheit 20 umfasst eine Service Control Engine um den Zugang des Teilnehmers 15 zum Telekommunikationsdienst des Telekommunikationsnetzwerks 10 zu kontrollieren.

In Figur 2 ist eine Darstellung eines beispielhaften Datennutzungsszenarios eines konventionellen fairen Flatrate Tarifs schematisch gezeigt. Auf der Abszisse ist die Zeit durch Anzeige der Tage, die während der Vertragslaufzeit des Teilnehmers 5 mit Bezug auf den abonnierten Telekommunikationsdienst vergangen sind, aufgetragen. Auf der Ordinate ist das Datenvolumen aufgetragen, z.B. in Megabytes. Es ist ersichtlich, dass der schematisch dargestellte Vertrag des Teilnehmers 5 ein nutzbares Datenvolumen von 1000 MB pro Monat des Vertrages umfasst. Zu Beginn des ersten Monats (d.h. bei einer Zahl von 0 Tagen) beträgt das mögliche nutzbare (oder "freie") Datenvolumen 1000 MB für diesen Teilnehmer 5, wobei dieses durch eine horizontal verlaufende gestrichelte Linie angezeigt wird, die parallel zur Abszisse von "0 Tage" bis "30 Tage" verläuft. Der Teilnehmer nutzt nutzbares Datenvolumen (welches durch eine gepunktete Datennutzentwicklungslinie repräsentiert wird) und erreicht das maximale nutzbare Datenvolumen vor dem Ende der ersten Abrechnungsperiode, d.h. des ersten Monats, d.h. am Ende des ersten Monats (ungefähr während der letzten 4 Tage des ersten Monats) ist kein nutzbares Datenvolumen (oder kein hohes Bandbreitendatenvolumen) mehr für den betrachteten Vertrag für den Teilnehmer verfügbar. Zu Beginn der nächsten Abrechnungsperiode, d.h. der zweite Monat, der auf der Abszisse zwischen "30 Tagen" und "60 Tagen" angezeigt wird, hat der Teilnehmer 5 ein weiteres nutzbares Datenvolumen von 1000 MB (wobei dieses durch eine weitere horizontal verlaufende gestrichelte Linie angezeigt wird, die parallel zur Abszisse von "30 Tage" bis "60 Tage" verläuft).

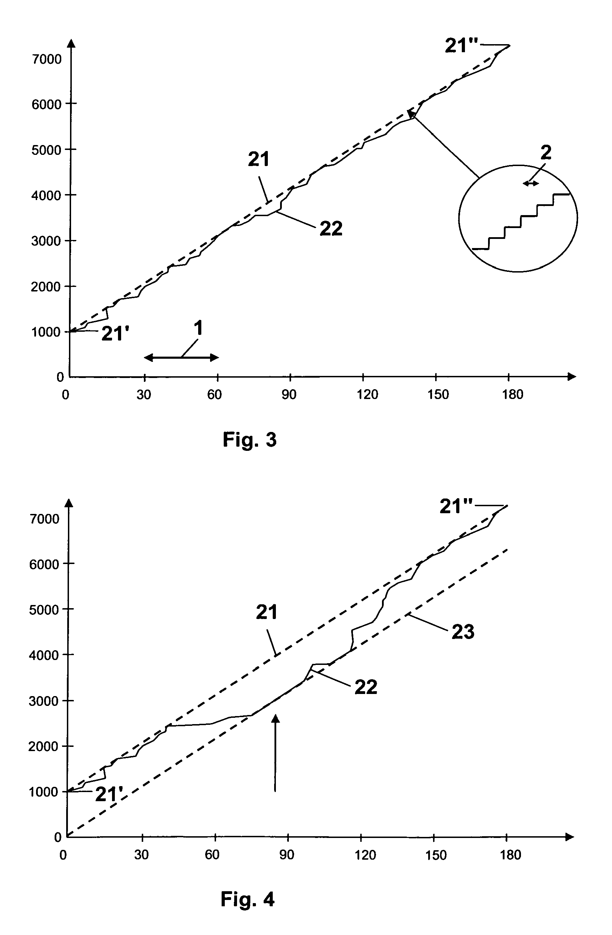

In den Figuren 3 bis 6 werden schematisch beispielhafte Datennutzungsszenarien eines fairen Flatrate-Tarifs gemäß verschiedenen Ausführungsformen der vorliegenden Erfindung gezeigt. Für alle diese Figuren gilt, dass auf der Abszisse die Zeit durch Anzeige der Tage, die während der Vertragslaufzeit des Teilnehmers 5 mit Bezug auf den abonnierten Telekommunikationsdienst vergangen sind, aufgetragen ist. Auf der Ordinate ist das Datenvolumen aufgetragen, z.B. in Megabytes.

Gemäß der vorliegenden Erfindung wird eine Kosteninformation von der Rechnungsfunktionseinheit 15 an die Datenverkehrsmanagementeinheit 20 übermittelt. Gemäß der vorliegenden Erfindung wird ein aktueller oberer Datenverbrauchsschwellenwert 21 aus der Kosteninformation abgeleitet. Der aktuelle obere Datenverbrauchsschwellenwert 21 gibt eine aktuelle Maximaldatenmenge an, die vom Teilnehmer 5 bezüglich des Telekommunikationsdienstes nutzbar ist. Der aktuelle obere Datenverbrauchsschwellenwert 21 wird in den Figuren 3 bis 6 durch eine gestrichelte Linie und das Bezugszeichen 21 angezeigt. Der aktuelle obere Datenverbrauchsschwellenwert 21 beginnt an einem Anfangswert 21' (imFolgenden auch anfängliches Datenvolumen 21' genannt), der dem aktuellen oberen Datenverbrauchsschwellenwert 21 zu Beginn der betrachteten Periode entspricht, z.B. eine vertragliche Periode, und endet an einem Enddatenvolumen 21 ". In den gezeigten Beispielen ist diese Periode immer mit 6 Monaten angenommen, also ungefähr 180 Tage. Natürlich sind gemäß der vorliegenden Erfindung auch andere Perioden (auch abhängig vom ersten Zeitintervall) möglich. Der Telekommunikationsdienst hat ein normales Dienstgebrauchsmuster, z.B. definiert durch eine maximale Bandbreite oder durch einen Qualitätsdienstparameter.

Gemäß des erfindungsgemäßen Verfahrens der vorliegenden Erfindung überwacht die Datenverkehrsmanagementeinheit den Datenfluss (vom Telekommunikationsnetzwerk 10 oder zum Telekommunikationsnetzwerk 10), der vom Teilnehmer 5 bezüglich des Telekommunikationsdienstes genutzt wird, und bestimmt das aktuelle Datenverbrauchsvolumen 22 des Teilnehm-ers 5. Weiterhin erfolgt durch die Datenverkehrsmanagementeinheit 20 ein Vergleich des aktuellen Datenverbrauchsvolumens 22 des Teilnehmers 5 mit dem aktuellen oberen Datenverbrauchsschwellenwert 21 und eine Modifikation des normalen Dienstgebrauchsmusters des Telekommunikationsdienstes falls das aktuelle Datenverbrauchsvolumen 22 und der aktuelle obere Datenverbrauchsschwellenwert 21 eine vorbestimmte Bedingung erfüllen, insbesondere falls das aktuelle Datenverbrauchsvolumen 22 den aktuellen oberen Datenverbrauchsschwellenwert 21 übersteigt. Erfindungsgemäß ist bevorzugt, dass eine Mindestzeit bzw. ein Mindestzeitinterval im Sinne eines dritten Zeitintervalls vergehen muss, bevor eine einmal durchgeführte Modifikation des normalen Dienstgebrauchsmusters des Telekommunikationsdienstes (z.B. eine Limitierung der verfügbaren Bandbreite für den spezifischen Teilnehmer, weil das maximale Datenvolumen verbraucht ist) wieder aufgehoben wird. Hierdurch wird eine Art Hysterese-Effekt realisiert, der in vorteilhafter Weise dazu führt, dass vermieden werden kann, dass in vergleichsweise kurzen zeitlichen Abständen im Telekommunikationsnetz immer wieder die Modifikation des normalen Dienstgebrauchsmusters des Telekommunikationsdienstes vorgenommen und danach wieder aufgehoben werden müssen. Somit kann der mit der Modifikation des normalen Dienstgebrauchsmusters und der Aufhebung dieser Modifikation verbundene Signalisierungsaufwand begrenzt werden.

Gemäß der vorliegenden Erfindung wird der aktuelle obere Datenverbrauchsschwellenwert 21 basierend auf einem gekauften Maximaldatenvolumen bezüglich eines ersten Zeitintervalls aktualisiert, wobei das Aktualisierungsintervall des aktuellen oberen Datenverbrauchsschwellenwerts 21 auf einem zweiten Zeitintervall basiert, wobei das zweite Zeitintervall kleiner und insbesondere viel kleiner als das erste Zeitintervall ist. Dieses wird in Figur 3 gezeigt. Es ist ersichtlich, dass der aktuelle obere Datenverbrauchsschwellenwert 21 durch Erhöhen während der Vertragslaufzeit aktualisiert wird (im Beispiel von "0 Tage" bis "180 Tage", d.h. 6 Monate). Diese kann entweder dadurch realisiert werden, dass der aktuelle obere Datenverbrauchsschwellenwert 21 kontinuierlich aktualisiert wird oder dass der aktuelle obere Datenverbrauchsschwellenwert 21 quasikontinuierlich aktualisiert wird, wie schematisch dargestellt in Figur 3 durch eine vergrößerte Darstellung des aktuellen oberen Datenverbrauchsschwellenwerts 21, beinhaltend das zweite Zeitintervall 2. Gemäß der vorliegenden Erfindung ist das zweite Zeitintervall 2 kleiner als das erste Zeitintervall 1, bevorzugt mindestens 5 mal kleiner, besonders bevorzugt mindestens 10 mal kleiner, ganz besonders bevorzugt mindestens 20 mal kleiner, und noch mehr bevorzugt mindestens 100 mal kleiner.

In Figur 3 ist der aktuelle obere Datenverbrauchsschwellenwert 21 die einzige Grenze des aktuellen Datenverbrauchsvolumens 22, d.h. durch Nichtnutzung des Datenvolumens für eine vergleichsweise lange Zeit, kann ein Teilnehmer 5 sofort ein vergleichsweise großes Datenvolumen auf einmal nutzen und dadurch Netzwerknutzungsspitzen hervorrufen. Dieses ist nicht vom Netzwerkbetreiber gewollt.

In Figur 4 ist schematisch ein weiteres beispielhaftes Datennutzungsszenario eines fairen Flatrate-Tarifs gemäß einer weiteren Ausführungsform der vorliegenden Erfindung gezeigt. In Figur 4 ist auch ein aktueller unterer Datenverbrauchsschwellenwert 23 gezeigt, d.h. dass ein Teilnehmer 5 nicht eine Menge an nutzbarem Datenvolumen akkumulieren kann (die der Teilnehmer sofort nutzen kann), welches die Trennung zwischen dem aktuellen oberen Datenverbrauchsschwellenwert 21 und dem aktuellen unteren Datenverbrauchsschwellenwert 23 überschreitet. Im Beispiel der Figur 4, beträgt diese z.B. 1000 MB d.h. gleich dem nutzbaren Datenvolumen pro Monat.

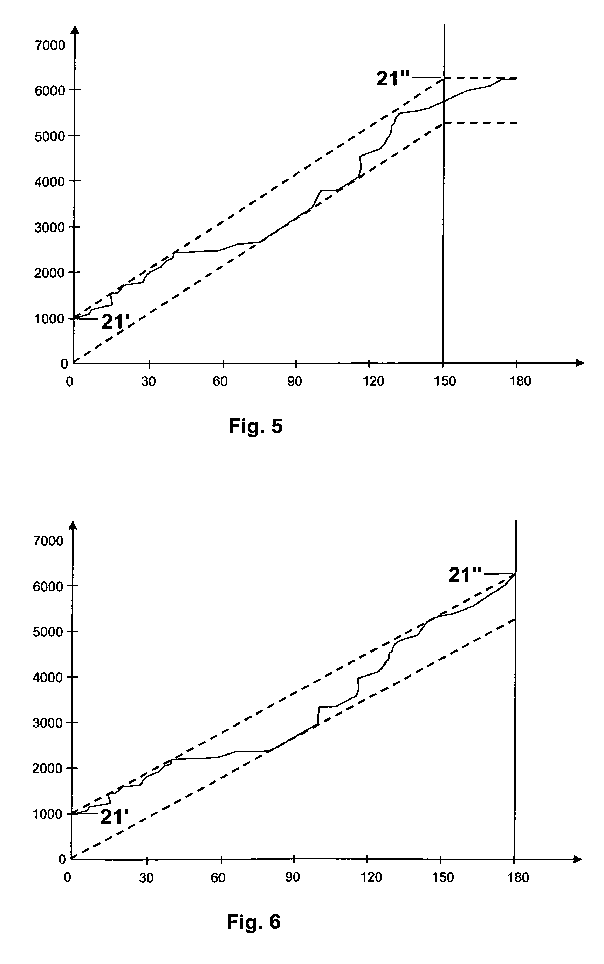

In Figur 5 ist schematisch ein weiteres beispielhaftes Datennutzungsszenario eines fairen Flatrate-Tarifs gemäß einer weiteren Ausführungsform der vorliegenden Erfindung gezeigt. Gemäß dieser Ausführungsform ist während des letzten Monats der Vertragslaufzeit kein weiterer Anstieg des verfügbaren Datenvolumens realisiert. Dieses ist so, weil das vertraglich verfügbare Datenvolumen (Enddatenvolumen 21 ") von z.B. 6 mal 1000 MB (bei einer monatlichen Datenrate von 1000 MB) bereits nach 5 Monaten (oder etwa 150 Tagen) erreicht ist wegen der anfänglichen Möglichkeit (Anfangsdatenvolumen 21'), 1000 MB während des ersten Monats zu nutzen.

In Figur 6 ist schematisch ein weiteres beispielhaftes Datennutzungsszenario eines fairen Flatrate-Tarifs gemäß einer weiteren Ausführungsform der vorliegenden Erfindung gezeigt. Gemäß dieser Ausführungsform gibt es eine Begrenzung des maximalen vertraglich verfügbaren Datenvolumens von z.B. 6 mal 1000 MB (bei einer monatlichen Datenrate von 1000 MB), d.h. 6 GB für etwa 180 Tage des Vertrags, sowie ein anfänglich nutzbares Datenvolumen von 1000 MB, aber während des letzten Monats der Laufzeit des Vertrags gibt es keinen weiteren Anstieg wegen der geringeren Gesamtdatenrate während der vorhergehenden Monate. Der Anstieg des aktuellen oberen Datenverbrauchsschwellenwerts 21 ist 5000 MB geteilt durch 6 Monate (d.h. etwa 833 MB pro zusätzlichem Monat) und startet bei einer 1000 MB Datenrate. Im Beispiel der Figur 6 steigt auch ein aktueller unterer Datenverbrauchsschwellenwert 23 mit einer Rate von 5000 MB geteilt durch 6 Monate an, d.h. zu jeder Zeit während des Vertrags kann der Teilnehmer 1000 MB pro beliebiger Periode von einem Monat nutzen.

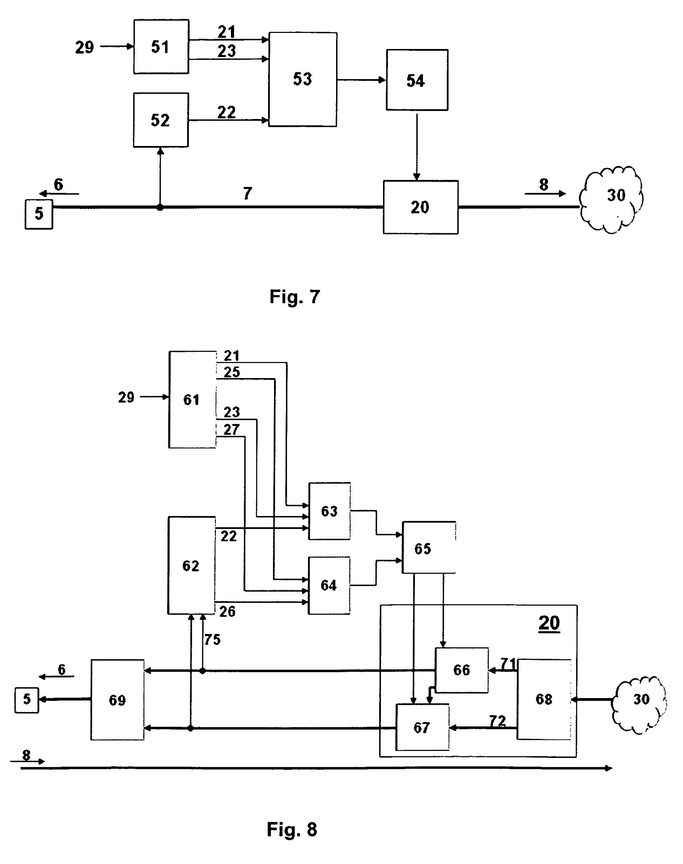

Der Verarbeitungsablauf, der zum Erreichen des erfindungsgemäßen Verfahrens der Onlineabrechnung des Teilnehmers 5 gemäß den Figuren 4, 5 und 6 führt (d.h. umfassend nicht nur einen aktuellen oberen Datenverbrauchsschwellenwert 21 sondern auch einen aktuellen oberen Datenverbrauchsschwellenwert 21 und einen aktuellen unteren Datenverbrauchsschwellenwert 23), ist schematisch in Figur 7 dargestellt. Ein Nutzer oder Teilnehmer 5 ist durch das Telekommunikationsnetzwerk mit einer Quelle 30 von angefragten Informationen verbunden, wie z.B. ein Internet Server. Der Teilnehmer 5 erhält einen Downlink Datenfluss 6 und kann einen Uplink Datenfluss 8 senden. Eine Zeitinformation 29 wird in einem ersten Verfahrensschritt 51 zur Verfügung gestellt. Eine Information in Bezug auf oder anzeigend das aktuelle Datenverbrauchsvolumen 22 wird in einem zweiten Verfahrensschritt 52 zur Verfügung gestellt. Im ersten Verfahrensschritt 51 werden der aktuelle obere Datenverbrauchsschwellenwert 21 und der aktuelle untere Datenverbrauchsschwellenwert 23 erzeugt und einem dritten Verfahrensschritt 53 zur Verfügung gestellt. Weiterhin wird im zweiten Verfahrensschritt 52 das aktuelle Datenverbrauchsvolumen 22 erzeugt und auch dem dritten Verfahrensschritt 53 zur Verfügung gestellt. Im dritten Verfahrensschritt 53 wird das aktuelle Datenverbrauchsvolumen 22 bevorzugt mit sowohl dem aktuellen oberen Datenverbrauchsschwellenwert 21 als auch mit dem aktuellen unteren Datenverbrauchsschwellenwert 23 verglichen, und in einem vierten Verfahrensschritt 54 wird entschieden, ob eine Änderung des normalen Dienstgebrauchsmusters durchgeführt wird, weil das aktuelle Datenverbrauchsvolumen 22 und der aktuelle obere Datenverbrauchsschwellenwert 21 eine vorbestimmte Bedingung erfüllen, wie z.B. dass das aktuelle Datenverbrauchsvolumen 22 übersteigt den aktuellen oberen Datenverbrauchsschwellenwert 21 oder das aktuelle Datenverbrauchsvolumen 22 unterscheidet sich weniger vom aktuellen oberen Datenverbrauchsschwellenwert 21 unterscheidet als ein vorbestimmter Wert. Falls eine solche vorbestimmte Bedingung erfüllt ist, führt die Datenverkehrsmanagementeinheit 20 die Änderung des normalen Dienstgebrauchsmusters bezüglich des Datenflusses 7 zum Teilnehmer 5 aus.

Gemäß einer bevorzugten Ausführungsform der vorliegenden Erfindung, die schematisch in Figur 8 dargestellt ist, wird die Onlinekostenabrechnung des Teilnehmers auch bezüglich eines weiteren Telekommunikationsdienstes im Telekommunikationsnetzwerk 10 durchgeführt, d.h. zusätzlich zur Onlinekostenabrechnung bezüglich des Telekommunikationsdienstes und dem zugeordneten Datenfluss 7, auf den sich die Figuren 3 bis 7 beziehen. Der weitere Telekommunikationsdienst weist ein weiteres normales Dienstgebrauchsmuster auf. Gemäß einer bevorzugten Ausführungsform der vorliegenden Erfindung, die in Figur 8 dargestellt ist, übermittelt die Rechnungsfunktionseinheit 15 eine weitere Kosteninformation an die Datenverkehrsmanagementeinheit 20. Ein aktueller weiterer oberer Datenverbrauchsschwellenwert 25 wird aus der weiteren Kosteninformation abgeleitet, wobei der aktuelle weitere obere Datenverbrauchsschwellenwert 25 eine aktuelle Maximaldatenmenge anzeigt, die vom Teilnehmer 5 bezüglich des weiteren Telekommunikationsdienstes nutzbar ist. Gemäß der bevorzugten Ausführungsform der vorliegenden Erfindung, die schematisch in Figur 8 dargestellt ist, überwacht die Datenverkehrsmanagementeinheit 20 den Datenfluss, der vom Teilnehmer 5 bezüglich des weiteren Telekommunikationsdienstes genutzt wird. Weiterhin wird ein aktuelles weiteres Datenverbrauchsvolumen 26 des Teilnehmers 5 bestimmt, und die Datenverkehrsmanagementeinheit 20 vergleicht das aktuelle weitere Datenverbrauchsvolumen 26 des Teilnehmers 5 mit dem aktuellen weiteren oberen Datenverbrauchsschwellenwert 25. Das weitere normale Dienstgebrauchsmuster des weiteren Telekommunikationsdienstes wird modifiziert, falls das aktuelle weitere Datenverbrauchsvolumen 26 und der aktuelle weitere obere Datenverbrauchsschwellenwert 25 eine vorbestimmte weitere Bedingung erfüllen, wobei der aktuelle weitere obere Datenverbrauchsschwellenwert 25 basierend auf einem weiteren gekauften Maximaldatenvolumen bezüglich des ersten Zeitintervalls aktualisiert wird, wobei das Aktualisierungsintervall des aktuellen weiteren oberen Datenverbrauchsschwellenwerts 25 auf dem zweiten Zeitintervall basiert, wobei das zweite Zeitintervall kleiner als das erste Zeitintervall ist.

In dem in Figur 8 gezeigten Beispiel beziehen sich der Telekommunikationsdienst und der weitere Telekommunikationsdienst auf unterschiedliche Prioritäten der Datenflüsse. In Downlink Richtung 6 vom Internet 30 zum Teilnehmer 5 trennt eine Datenflusstrenneinheit 68 (bevorzugt Teil der Datenverkehrsmanagementeinheit 20) einen ersten Datenfluss (angezeigt durch Bezugszeichen 71) mit einer ersten Priorität von einem zweiten Datenfluss (angezeigt durch Bezugszeichen 72) mit einer zweiten Priorität. Der Teilnehmer 5 erhält einen Downlink Datenfluss 6 und kann einen Uplink Datenfluss 8 senden. Durch eine erste Datenverkehrsmanagementuntereinheit 66 kann Datenverkehrsmanagement des ersten Datenflusses 71 durchgeführt werden und durch eine zweite Datenverkehrsmanagementuntereinheit 67 kann Datenverkehrsmanagement des zweiten Datenflusses 72 durchgeführt werden.

Eine Zeitinformation 29 wird einem ersten Verfahrensschritt 61 zur Verfügung gestellt. Eine Information in Bezug auf oder anzeigend das aktuelle Datenverbrauchsvolumen 22 (des ersten Telekommunikationsdienstes) und eine Information in Bezug auf oder anzeigend das aktuelle weitere Datenverbrauchsvolumen 26 (des zweiten Telekommunikationsdienstes) wird in einem zweiten Verfahrensschritt 62 zur Verfügung gestellt. Im ersten Verfahrensschritt 61 werden der aktuelle obere Datenverbrauchsschwellenwert 21 (des ersten Telekommunikationsdienstes) und der aktuelle untere Datenverbrauchsschwellenwert 23 (des ersten Telekommunikationsdienstes) erzeugt und einem dritten Verfahrensschritt 63 zur Verfügung gestellt. Entsprechend werden im ersten Verfahrensschritt 61 der aktuelle weitere obere Datenverbrauchsschwellenwert 25 (des zweiten Telekommunikationsdienstes) und der aktuelle weitere untere Datenverbrauchsschwellenwert 27 (des zweiten Telekommunikationsdienstes) erzeugt und einem vierten Verfahrensschritt 64 zur Verfügung gestellt. Weiterhin wird im zweiten Verfahrensschritt 62 das aktuelle Datenverbrauchsvolumen 22 erzeugt und dem dritten Verfahrensschritt 63 zur Verfügung gestellt. Weiterhin wird im zweiten Verfahrensschritt 62 das aktuelle weitere Datenverbrauchsvolumen 26 erzeugt und dem vierten Verfahrensschritt 64 zur Verfügung gestellt. Im dritten Verfahrensschritt 63 wird das aktuelle Datenverbrauchsvolumen 22 bevorzugt mit sowohl dem aktuellen oberen Datenverbrauchsschwellenwert 21 als auch mit dem aktuellen unteren Datenverbrauchsschwellenwert 23 verglichen. Im vierten Verfahrensschritt 64 wird das aktuelle weitere Datenverbrauchsvolumen 26 bevorzugt mit sowohl dem aktuellen weiteren oberen Datenverbrauchsschwellenwert 25 als auch mit dem aktuellen weiteren unteren Datenverbrauchsschwellenwert 27 verglichen. In einem fünften Verfahrensschritt 65 wird entschieden, ob eine Änderung des normalen Dienstgebrauchsmusters (und/oder des weiteren normalen Dienstgebrauchsmusters) durchgeführt wird (durch die erste Datenverkehrsmanagementuntereinheit 66 und/oder die zweite Datenverkehrsmanagementuntereinheit 67), weil das aktuelle Datenverbrauchsvolumen 22 und der aktuelle obere Datenverbrauchsschwellenwert 21 eine vorbestimmte Bedingung erfüllen und/oder weil das aktuelle weitere Datenverbrauchsvolumen 26 und der aktuelle weitere obere Datenverbrauchsschwellenwert 25 eine vorbestimmte weitere Bedingung erfüllen. Falls eine solche vorbestimmte Bedingung oder vorbestimmte weitere Bedingung erfüllt ist, führt die Datenverkehrsmanagementeinheit 20 die Änderung des normalen Dienstgebrauchsmusters oder des weiteren normalen Dienstgebrauchsmusters bezüglich des Datenflusses 7 zum Teilnehmer 5 aus.

## Patentansprüche

1. Verfahren zur Onlinekostenabrechnung (processing online charging) eines Teilnehmers (5), wobei der Teilnehmer (5) einen Telekommunikationsdienst in einem Telekommunikationsnetzwerk (10) gemäß einem sich auf den Telekommunikationsdienst beziehenden Vertrag nutzt, wobei das Verfahren die folgenden Schritte umfasst:
-- Übermittlung durch eine Rechnungsfunktionseinheit (15) (billing entity) einer Kosteninformation (charging information) an eine Datenverkehrsmanagementeinheit (20) (data traffic management entity), wobei ein aktueller oberer Datenverbrauchsschwellenwert (21) (current upper data usage threshold) aus der Kosteninformation abgeleitet wird, wobei der aktuelle obere Datenverbrauchsschwellenwert (21) eine aktuelle Maximaldatenmenge (current maximum level of data) angibt, die vom Teilnehmer (5) bezüglich des Telekommunikationsdienstes nutzbar ist, wobei der Telekommunikationsdienst ein normales Dienstgebrauchsmuster (standard service usage pattern) aufweist,
-- Überwachung durch die Datenverkehrsmanagementeinheit (20) des Datenflusses (flow of data), der vom Teilnehmer (5) bezüglich des Telekommunikationsdienstes genutzt wird, und Bestimmung eines aktuellen Datenverbrauchsvolumens (22) (current data usage volume) des Teilnehmers (5),
-- Vergleich durch die Datenverkehrsmanagementeinheit (20) des aktuellen Datenverbrauchsvolumens (22) des Teilnehmers (5) mit dem aktuellen oberen Datenverbrauchsschwellenwert (21) und,
-- Modifikation des normalen Dienstgebrauchsmusters des
Telekommunikationsdienstes, falls das aktuelle Datenverbrauchsvolumen (22) und der aktuelle obere Datenverbrauchsschwellenwert (21) eine vorbestimmte Bedingung erfüllen, wobei der aktuelle obere Datenverbrauchsschwellenwert (21) basierend auf einem gekauften Maximaldatenvolumen bezüglich eines ersten Zeitintervalls aktualisiert wird, wobei das Aktualisierungsintervall (update interval) des aktuellen oberen Datenverbrauchsschwellenwerts (21) auf einem zweiten Zeitintervall basiert, wobei das zweite Zeitintervall kleiner als das erste Zeitintervall ist.

2. Verfahren nach Anspruch 1, **dadurch gekennzeichnet, dass** ein aktueller unterer Datenverbrauchsschwellenwert (23) (current lower data usage threshold) aus der Kosteninformation bestimmt wird, wobei der aktuelle untere Datenverbrauchsschwellenwert (23) eine aktuelle Minimaldatenmenge (current minimum level of data), die vom Teilnehmer (5) nutzbar ist, anzeigt, wobei das Verfahren die folgenden Schritte umfasst:
-- die Datenverkehrsmanagementeinheit (20) vergleicht das aktuelle Datenverbrauchsvolumen (22) des Teilnehmers (5) mit dem aktuellen unteren Datenverbrauchsschwellenwert (23) und
-- die Datenverkehrsmanagementeinheit (20) passt das aktuelle Datenverbrauchsvolumen (22) an den aktuellen unteren Datenverbrauchsschwellenwert (23) an, falls das aktuelle Datenverbrauchsvolumen (22) kleiner als der aktuelle untere Datenverbrauchsschwellenwert (23) ist, wobei der aktuelle untere Datenverbrauchsschwellenwert (23) basierend auf dem gekauften Maximaldatenvolumen bezüglich des ersten Zeitintervalls aktualisiert wird, wobei das Aktualisierungsintervall des aktuellen unteren Datenverbrauchsschwellenwerts (23) auf dem zweiten Zeitintervall basiert, wobei das zweite Zeitintervall kleiner als das erste Zeitintervall ist.

3. Verfahren nach einem der vorhergehenden Ansprüche, **dadurch gekennzeichnet, dass** die vorbestimmte Bedingung des aktuellen Datenverbrauchsvolumens (22) und des aktuellen oberen Datenverbrauchsschwellenwerts (21) umfasst:
-- das aktuelle Datenverbrauchsvolumen (22) überschreitet den aktuellen oberen Datenverbrauchsschwellenwert (21) oder
-- das aktuelle Datenverbrauchsvolumen (22) unterscheidet sich weniger vom aktuellen oberen Datenverbrauchsschwellenwert (21) als ein vorbestimmter Wert.

4. Verfahren nach einem der vorhergehenden Ansprüche, **dadurch gekennzeichnet, dass** der aktuelle obere Datenverbrauchsschwellenwert (21) und/oder der aktuelle untere Datenverbrauchsschwellenwert (23) durch Erhöhen während der Vertragslaufzeit des Teilnehmers (5) aktualisiert werden.

5. Verfahren nach einem der vorhergehenden Ansprüche, **dadurch gekennzeichnet, dass** zu Beginn der Vertragslaufzeit bezüglich des Telekommunikationsdienstes der aktuelle obere Datenverbrauchsschwellenwert (23) dem anfänglichen Datenvolumen (21') (initial data volume) entspricht, das vom Teilnehmer (5) genutzt wird, und wobei am Ende der Vertragslaufzeit der aktuelle obere Datenverbrauchsschwellenwert (23) einem Enddatenvolumen (21 ") (end data volume) entspricht, wobei das Enddatenvolumen (21") entspricht:
-- dem gekauften maximalen Datenvolumen multipliziert mit der Anzahl der ersten Zeitintervalle des Vertrags, oder
-- der Summe aus dem anfänglichen Datenvolumen (21') auf der einen Seite und dem gekauften maximalen Datenvolumen multipliziert mit der Anzahl der ersten Zeitintervalle des Vertrags auf der anderen Seite.

6. Verfahren nach einem der vorhergehenden Ansprüche, **dadurch gekennzeichnet, dass** das normale Dienstgebrauchsmuster durch Anwendung eines reduzierten Dienstgebrauchsmusters modifiziert wird, wobei das reduzierte Dienstgebrauchsmuster aufweist:
-- eine reduzierte Bandbreite im Vergleich zum normalen Dienstgebrauchsmuster und/oder
-- eine reduzierte Priorität der Datenübertragung im Vergleich zum normalen Dienstgebrauchsmuster.

7. Verfahren nach einem der vorhergehenden Ansprüche, **dadurch gekennzeichnet, dass** das erste Zeitintervall entweder einem Monat oder einer Woche entspricht, und wobei das zweite Zeitintervall gleich groß ist wie oder kleiner ist als:
-- eine Sekunde,
-- eine Minute,
-- eine Stunde, oder
-- 24 Stunden.

8. Verfahren nach einem Ansprüche 1 bis 6, **dadurch gekennzeichnet, dass** das erste Zeitintervall einem Tag entspricht, und wobei das zweite Zeitintervall gleich groß ist wie oder kleiner ist als:
-- eine Sekunde
-- eine Minute, oder
-- eine Stunde.

9. Verfahren nach einem der vorhergehenden Ansprüche, **dadurch gekennzeichnet, dass** die Onlinekostenabrechnung des Teilnehmers (5) bezüglich eines anderen Telekommunikationsdienstes im Telekommunikationsnetzwerk (10) durchgeführt wird, wobei das Verfahren die folgenden Schritte umfasst:
-- Übermittlung durch die Rechnungsfunktionseinheit (15) einer weiteren Kosteninformation (further charging information) an die Datenverkehrsmanagementeinheit (20), wobei ein aktueller weiterer oberer Datenverbrauchsschwellenwert (25) (current further upper data usage threshold) aus der weiteren Kosteninformation abgeleitet wird, wobei der aktuelle weitere obere Datenverbrauchsschwellenwert (25) eine aktuelle Maximaldatenmenge anzeigt, die vom Teilnehmer (5) bezüglich des weiteren Telekommunikationsdienstes nutzbar ist, wobei der weitere Telekommunikationsdienst ein weiteres normales Dienstgebrauchsmuster (further standard service usage pattern) aufweist,
-- Überwachung durch die Datenverkehrsmanagementeinheit (20) des Datenflusses, der vom Teilnehmer (5) bezüglich des weiteren Telekommunikationsdienstes genutzt wird, und Bestimmung eines aktuellen weiteren Datenverbrauchsvolumens (26) (current further data usage volume) des Teilnehmers (5),
-- Vergleich durch die Datenverkehrsmanagementeinheit (20) des aktuellen weiteren Datenverbrauchsvolumens (26) des Teilnehmers (5) mit dem aktuellen weiteren oberen Datenverbrauchsschwellenwert (25) und,
-- Modifikation des normalen Dienstgebrauchsmusters des weiteren Telekommunikationsdienstes, falls das aktuelle weitere Datenverbrauchsvolumen (26) und der aktuelle weitere obere Datenverbrauchsschwellenwert (25) eine vorbestimmte weitere Bedingung erfüllen, wobei der aktuelle weitere obere Datenverbrauchsschwellenwert (25) basierend auf einem weiteren gekauften Maximaldatenvolumen (further purchased maximum data volume) bezüglich des ersten Zeitintervalls aktualisiert wird, wobei das Aktualisierungsintervall des aktuellen weiteren oberen Datenverbrauchsschwellenwerts (25) auf dem zweiten Zeitintervall basiert, wobei das zweite Zeitintervall kleiner als das erste Zeitintervall ist.

10. System zur Onlinekostenabrechnung eines Teilnehmers (5), wobei der Teilnehmer (5) einen Telekommunikationsdienst in einem Telekommunikationsnetzwerk (10) gemäß einem Vertrag bezüglich des Telekommunikationsdienstes nutzt, wobei das System eine Rechnungsfunktionseinheit (15) und eine Datenverkehrsmanagementeinheit (20) umfasst, wobei dass System derart konfiguriert ist, dass
-- die Rechnungsfunktionseinheit (15) eine Kosteninformation an die Datenverkehrsmanagementeinheit (20) übermittelt, wobei ein aktueller oberer Datenverbrauchsschwellenwert (21) aus der Kosteninformation abgeleitet wird, wobei der aktuelle obere Datenverbrauchsschwellenwert (21) eine aktuelle Maximaldatenmenge anzeigt, die vom Teilnehmer (5) bezüglich des Telekommunikationsdienstes nutzbar ist, wobei der Telekommunikationsdienst ein normales Dienstgebrauchsmuster aufweist,
-- die Datenverkehrsmanagementeinheit (20) den Datenfluss überwacht, der vom Teilnehmer (5) bezüglich des Telekommunikationsdienstes genutzt wird, und ein aktuelles Datenverbrauchsvolumen (22) des Teilnehmers (5) bestimmt,
-- die Datenverkehrsmanagementeinheit (20) das aktuelle Datenverbrauchsvolumen (22) des Teilnehmers (5) mit dem aktuellen oberen Datenverbrauchsschwellenwert (21) vergleicht und,
-- das normale Dienstgebrauchsmuster des Telekommunikationsdienstes modifizierbar ist, falls das aktuelle Datenverbrauchsvolumen (22) und der aktuelle obere Datenverbrauchsschwellenwert (21) eine vorbestimmte Bedingung erfüllen, wobei der aktuelle obere Datenverbrauchsschwellenwert (21) basierend auf einem gekauften Maximaldatenvolumen bezüglich eines ersten Zeitintervalls aktualisiert wird, wobei das Aktualisierungsintervall des aktuellen oberen Datenverbrauchsschwellenwerts (21) auf einem zweiten Zeitintervall basiert, wobei das zweite Zeitintervall kleiner als das erste Zeitintervall ist.

11. Programm umfassend einen Programmcode, der, wenn er auf einem Computer ausgeführt wird, den Computer zur Durchführung eines Verfahrens gemäß einem der Ansprüche 1 bis 9 veranlasst.

12. Computerprogrammprodukt zur Onlinekostenabrechnung eines Teilnehmers (5), umfassend ein Computerprogramm, das in einem Speicher gespeichert ist, wobei das Computerprogramm einen Programmcode umfasst, der, wenn er auf einem Computer ausgeführt wird, den Computer zur Durchführung eines Verfahrens gemäß einem der Ansprüche 1 bis 9 veranlasst.
